# EUROPÄISCHE PATENTSCHRIFT

(11) **EP 3 952 698 B1**
(45) Veröffentlichungstag und Bekanntmachung des Hinweises auf die Patenterteilung: **06.12.2023**
(21) Anmeldenummer: 20713617.7
(22) Anmeldetag: 23.03.2020
(51) Int. Cl.: A46D 1/00, A46B 3/04

(54) **MUNDPFLEGEINSTRUMENT**
ORAL TREATMENT INSTRUMENT
INSTRUMENT D'HYGIÈNE BUCCO-DENTAIRE

(30) Priorität: 09.04.2019 DE 102019205055
(43) Veröffentlichungstag der Anmeldung: 16.02.2022
(73) Patentinhaber: M+C Schiffer GmbH, 53577 Neustadt/Wied (DE)
(72) Erfinder: HUNDENBORN, Maik, 53229 Bonn (DE); SCHMIDT, Bernhard Josef, 56593 Pleckhausen (DE); MÜHLE, Rebecca, 56235 Ransbach-Baumbach (DE)
(74) Vertreter: Grünecker Patent- und Rechtsanwälte PartG mbB
(86) Internationale Anmeldenummer: PCT/EP2020/057996
(87) Internationale Veröffentlichungsnummer: WO 2020/207778

(56) Entgegenhaltungen:
- GB-A- 2 391 462
- US-A1- 2014 082 867
- US-A1- 2018 317 640

## Beschreibung

Die vorliegende Erfindung betrifft ein Mundpflegeinstrument, insbesondere eine Zahnbürste oder einen Zungenreiniger, und ein Verfahren zu dessen Herstellung.

Die Mundpflege umfasst neben einer Reinigung der Zähne auch eine regelmäßige Reinigung der Mundschleimhäute und der Zungenoberfläche. Einer Reinigung der Zungenoberfläche kommt dabei besondere Bedeutung zu. Bei allen Menschen bildet sich auf der Zunge ein Zungenbelag bestehend aus abgestorbenen Zellen, Blutbestandteilen, Speichelbestandteilen, Nahrungsresten und Mikroorganismen. Durch die Oberflächenstruktur der Zunge findet dieser Belag guten Halt auf der Zungenoberfläche. Es ist dabei bekannt, dass insbesondere die im Zungenbelag enthaltenen Mikroorganismen maßgeblich an der Entstehung von Mundgeruch beteiligt sind. So korreliert die Menge an Zungenbelag oft mit der Entstehung von Mundgeruch. Eine regelmäßige mechanische Entfernung des Zungenbelags ist deshalb ein geeignetes Mittel, um Mundgeruch zu vermeiden.

Zur Entfernung des Zungenbelags ist es bekannt, Mundpflegeinstrumente mit speziellen Reinigungselementen aus üblicherweise weichelastischen thermoplastischen Elastomeren einzusetzen. Anders als die zur Zahnreinigung eingesetzten, aus relativ harten Kunststofffasern hergestellten Borsten einer Zahnbürste, erlauben diese Reinigungselemente eine schonende Reinigung von Zunge und Mundschleimhäuten, ohne diese zu verletzten. Zur Herstellung dieser Reinigungselemente werden thermoplastische Elastomere, wie beispielsweise Styrolblockcopolymere eingesetzt. Die bekannten Mundpflegeinstrumente zur Reinigung der Mundschleimhäute und der Zungenoberfläche können als Zungenschaber ausgeführt sein, die ausschließlich Reinigungselemente aus dem genannten Kunststoffmaterial aufweisen, oder als Zahnbürsten, die sowohl die genannten Reinigungselemente als auch Borsten zur Reinigung der Zähne aufweisen.

Eine Zahnbürste mit Reinigungselementen aus weichelastischem Kunststoff ist beispielsweise in der US 2005/0166344 A1 offenbart. Diese Druckschrift zeigt eine Zahnbürste mit einem länglichen Stiel, der als Griff dient, und einem damit verbundenen Bürstenkopf, auf dessen einer Seite ein Borstenfeld zur Reinigung der Zähne angeordnet ist. Auf der dem Borstenfeld abgewandten Seite des Bürstenkopfes weist die Zahnbürste eine Vielzahl von noppenförmigen Reinigungselementen aus einem weichelastischen Kunststoffmaterial auf, welche zur Reinigung der Zunge eingesetzt werden. Mit Hilfe dieser Reinigungselemente soll die Entstehung von Mundgeruch verhindert werden.

Reinigungselemente aus weichelastischem Kunststoff sind darüber hinaus auch beispielsweise aus der EP 1 859 705 A1 bekannt. Diese offenbart eine Zahnbürste mit einem Bürstenkopfgrundkörper aus Kunststoff, an dessen einer Seite Borstenbündel fixiert sind. Durch teilweises Umspritzen des Bürstenkopfgrundkörpers mit einer weichelastischen Kunststoffkomponente werden lamellenförmige Reinigungselemente gebildet, die parallel zur Längsrichtung der Borstenbündel verlaufen und zur gleichen Seite wie die Borstenbündel vom Bürstenkopf abstehen. Diese Reinigungselemente dienen unter anderem zum weiteren Schutz der Mundschleimhäute.

Es ist Aufgabe der vorliegenden Erfindung, ein verbessertes Mundpflegeinstrument bereitzustellen, mit dem die Entstehung von Mundgeruch effektiv unterbunden werden kann.

Zur Lösung dieser Aufgabe stellt die vorliegende Erfindung ein Mundpflegeinstrument gemäß Anspruch 1.

Dieser Erfindung liegt die Erkenntnis zugrunde, dass die Beimischung von Aktivkohle zu dem Kunststoffmaterial des Reinigungselements zu einer Verringerung von Mundgeruch und einer verbesserten Reinigung der Mundschleimhäute und der Zungenoberfläche führt. Die Aktivkohle ermöglicht es insbesondere, schlechte Gerüche, wie sie durch Bakterien, Ablagerungen und Speichelfluss erzeugt werden, zu absorbieren.

Das Reinigungselement ist aus einer ersten Kunststoffkomponente hergestellt, die zumindest ein thermoplastisches Elastomer enthält. Geeignete thermoplastische Elastomere zur Herstellung von derartigen Reinigungselementen sind dem Fachmann bekannt. Im Allgemeinen versteht der Fachmann unter dem Begriff der thermoplastischen Elastomere Kunststoffe, die sich bei Raumtemperatur elastisch verhalten, sich jedoch unter Wärmezufuhr plastisch verformen lassen. Damit eignen sich thermoplastische Elastomere insbesondere für den Einsatz in Spritzgussverfahren. Dementsprechend ist das erfindungsgemäße Reinigungselement vorzugsweise spritzgegossen. Auf diese Weise kann das Reinigungselement durch an sich bekannte Spritzgussverfahren in unterschiedlichen Formen hergestellt werden. Durch seine elastischen Eigenschaften eignet sich das thermoplastische Elastomer außerdem zur schonenden Reinigung der Mundschleimhäute oder der Zungenoberfläche, ohne dass die Gefahr einer äußeren Verletzung des Gewebes besteht.

Geeignete thermoplastische Elastomere für die erste Kunststoffkomponente sind insbesondere Styrolcopolymere, wie beispielsweise Styrol-Ethylen-Butylen-Copolymere, Styrol-Butylen-Copolymere, Styrol-Ethylen-Propylen-Copolymere oder Styrol-Isopren-Copolymere. Besonders bevorzugt handelt es sich dabei um Blockcopolymere, wie beispielsweise Styrol/Butadien Block-Copolymer (SBS), Styrol/Isopren-Block-Copolymer (SIS), Styrol/Ethenbuten/Styrol-Block-Copolymer (SEBS) und Styrol/Ethenpropen/Styrol-Block-Copolymer (SEPS). Die erste Kunststoffkomponente kann auch eine Mischung von thermoplastischen Elastomeren umfassen.

Vorzugsweise hat die erste Kunststoffkomponente weichelastische Eigenschaften, um eine Verletzung der Mundschleimhäute oder der Zungenoberfläche zu verhindern. So weist die erste Kunststoffkomponente vorzugsweise eine Shore-Härte von 1 bis 70 Shore-A, besonders bevorzugt 5 bis 40 Shore-A, am meisten bevorzugt 10 bis 30 Shore-A, gemessen nach DIN ISO 7619-1:2012 auf.

Da die Härte der ersten Kunststoffkomponente maßgeblich von den Eigenschaften des thermoplastischen Elastomers beeinflusst wird, weist das thermoplastische Elastomer Erfindungsgemäß eine Shore-Härte von 1 bis 50 Shore-A, vorzugsweise ebenfalls eine Shore-Härte von 1 bis 70 Shore-A, besonders bevorzugt 5 bis 40 Shore-A, am meisten bevorzugt 10 bis 30 Shore-A gemessen nach DIN ISO 7619-1:2012 auf.

Die Form des Reinigungselements kann angepasst werden, um eine optimale Reinigungswirkung zu erzielen. Beispielsweise kann das Reinigungselement noppen-, stäbchen- oder lamellenförmige Vorsprünge aufweisen. Die Vorsprünge weisen vorzugsweise eine Länge von 0,1 bis 20 mm, besonders bevorzugt 0,2 bis 15 mm, am meisten bevorzugt 0,5 bis 10 mm auf.

In einer Ausführungsform umfasst das Mundpflegeinstrument einen Kopfteil und einen Stielteil. Mindestens ein Reinigungselement ist in dieser Ausführungsform am Kopfteil angeordnet.

Der Stielteil kann insbesondere als Handgriff ausgeformt werden. Der Stielteil kann aber auch in Form eines Adapters ausgeformt sein, der den Anschluss des Mundpflegeinstruments an einen separaten Griff ermöglicht. Beispielsweise kann das Mundpflegeinstrument auf diese Weise an den Griffteil einer elektrischen Zahnbürste angeschlossen werden.

Der Kopfteil ist vorzugsweise so geformt, dass er eine Handhabung des Mundpflegeinstruments im Mundraum ermöglicht. Dabei ist der Kopfteil insbesondere so bemessen, dass er in den Raum zwischen Backenzähnen und Wangenschleimhaut eingeführt werden kann.

In einer Ausführungsform weist das Mundpflegeinstrument einen Grundkörper auf, welcher den Kopfteil und den Stielteil ausformt. Der Grundkörper besteht aus einer zweiten Kunststoffkomponente. Die zweite Kunststoffkomponente ist vorzugsweise aus einem härteren Kunststoff gefertigt, als die erste Kunststoffkomponente. Die Shore-Härte der zweiten Kunststoffkomponente beträgt vorzugsweise 30 bis 100 Shore- D, besonders bevorzugt 40 bis 80 Shore-D, am meisten bevorzugten 50 bis 80 Shore-D gemessen nach DIN ISO 7619-1:2012. Ein geeigneter Kunststoff zur Herstellung des Grundkörpers ist beispielsweise Polypropylen.

Der Grundkörper ist vorzugsweise zumindest teilweise mit der ersten Kunststoffkomponente umspritzt. Dabei kann zur Bildung des Reinigungselements nicht nur der Kopfteil umspritzt werden, sondern auch Bereiche des Stielteils. Auf diese Weise können beispielsweise Griffflächen aus der ersten Kunststoffkomponente gebildet werden. Die Umspritzung des Grundkörpers mit der ersten Kunststoffkomponente kann von einem einzigen Anspritzpunkt erfolgen, so dass sich ein zusammenhängender Bereich aus der ersten Kunststoffkomponente bildet. Alternativ dazu, können auch mehrere Anspritzpunkte verwendet werden, so dass voneinander getrennte Bereiche aus der ersten Kunststoffkomponente entstehen.

In einer bevorzugten Ausführungsform handelt es sich bei dem Mundpflegeinstrument um eine Zahnbürste, wobei das Kopfteil zusätzlich zu dem Reinigungselement ein oder mehrere Borstenbündel zur Zahnreinigung aufweist. Die Borstenbündel bestehen vorzugsweise aus extrudierten Kunststofffasern, beispielsweise Polyamidfasern. Vorzugsweise sind diese Borstenbündel im Wesentlichen parallel zueinander angeordnet und stehen gemeinsam zu einer Seite des Kopfteils hin ab. Die so angeordneten Borstenbündel bilden damit ein Borstenfeld. Die einzelnen Borstenbündel eines Borstenfeldes können sich beispielsweise hinsichtlich ihrer Länge und ihres Härtegrades unterscheiden. Unter im Wesentlichen parallel angeordneten Borstenbündel versteht der Fachmann nicht nur exakt parallel angeordnete Borstenbündel, sondern auch schräg zueinander verlaufende Borstenbündel, sofern die Längsachsen der Borstenbündel in einem Winkel von nicht mehr als 30°, bevorzugt nicht mehr als 20°, besonders bevorzugt nicht mehr als 10° zueinander stehen.

In einer Ausführungsform ist mindestens ein Reinigungselement auf einer den Borstenbündeln abgewandten Seite des Kopfteils angeordnet. Dies hat den Vorteil, dass die mit den Borstenbündeln versehene Seite des Kopfteils zur Reinigung der Zähne verwendet werden kann, während das auf der abgewandten Seite des Kopfteils angeordnete Reinigungselement beispielsweise zur Zungenreinigung verwendet wird.

Alternativ oder ergänzend dazu ist mindestens ein Reinigungselement auf der gleichen Seite des Kopfteils wie die Borstenbündel angeordnet. Vorzugsweise ist die Längsrichtung des Reinigungselements dabei im Wesentlichen parallel zur Längsrichtung der Borstenbündel angeordnet. Vorzugsweise beträgt der Winkel zwischen der Längsrichtung des Reinigungselements und der Längsrichtung der Borstenbündel dabei nicht mehr als 30°, besonders bevorzugt nicht mehr als 20°, am meisten bevorzugt nicht mehr als 10°.

Reinigungselemente auf der den Borstenbündeln abgewandten Seite des Kopfteils können beispielsweise stäbchen-, lamellen- oder noppenförmig ausgeformt sein. Das Reinigungselement kann dabei vorzugsweise über eine Länge von 0,1 bis 10, besonders bevorzugt 0,2 bis 5, am meisten bevorzugt 0,5 bis 3 mm von dem Kopfteil abstehen.

Ein Reinigungselement, das auf der gleichen Seite des Kopfteils wie die Borstenbündel angeordnet ist, ist vorzugsweise stäbchen- oder lamellenförmig ausgeformt. Die Länge dieses Reinigungselements beträgt dabei vorzugsweise 1 bis 20 mm, besonders bevorzugt 5 bis 15 mm, am meisten bevorzugt 8 bis 12 mm.

Zur Vermeidung von Mundgeruch enthält die erste Kunststoffkomponente Aktivkohle. Gemäß der Erfindung beträgt der Anteil von Aktivkohle an der ersten Kunststoffkomponente 1 bis 50 GEW.-%. Vorzugsweise beträgt der Anteil von Aktivkohle an der ersten Kunststoffkomponente 5 bis 30 Gew.-%, am meisten bevorzugt 10 bis 20 Gew.-%.

Die Aktivkohle ist vorzugsweise pulverförmig und weist einen bevorzugten mittleren Korndurchmesser von 200 µm oder weniger, besonders bevorzugt 100 µm oder weniger, am meisten bevorzugt 75 µm oder weniger auf. Der mittlere Korndurchmesser der Aktivkohle beträgt beispielsweise 5 bis 200 µm, besonders bevorzugt 10 bis 100 µm, am meisten bevorzugt 20 bis 75 µm.

Um eine besonders effektive Reduktion von Mundgeruch zu erzielen, wird vorzugsweise eine Aktivkohle mit großer innerer Oberfläche eingesetzt. Als Maß für die innere Oberfläche der Aktivkohle dient beispielsweise die Jodzahl gemessen nach ASTM D 4607 und/oder die BET-Oberfläche gemessen nach DIN ISO 9277:2003-05. Vorzugsweise weist die Aktivkohle eine Jodzahl von mindestens 400 mg/g, bevorzugt mindestens 600 mg/g, am meisten bevorzugt mindestens 900 mg/g gemessen nach ASTM D 4607 auf und/oder eine BET-Oberfläche von mindestens 300 m²/g, bevorzugt 300 bis 2000 m²/g, besonders bevorzugt 800 bis 1200 m²/g gemessen nach DIN ISO 9277:2003-05 auf.

Eine verbesserte Reduktion von Mundgeruch kann darüber hinaus dadurch erzielt werden, dass die erste Kunststoffkomponente zusätzlich zu dem thermoplastischen Elastomer und der Aktivkohle weitere Zuschlagsstoffe enthält, welche die Porengröße des thermoplastischen Elastomers vergrößern und damit die Einlagerung der Aktivkohle verbessern. Als Zuschlagsstoff kommt hierbei insbesondere Kreide (Kalziumkarbonat) in Frage. Gemäß der Erfindung umfasst die erste Kunstoffkomponente deshalb Kreide in einer Menge von 1 bis 35 Gew.-%. In einer bevorzugten Ausführungsform umfasst die erste Kunststoffkomponente Kreide in einer Menge von bevorzugt 2 bis 35 Gew.-%, am meisten bevorzugt 5 bis 25 Gew.-%. Vorzugsweise umfasst die erste Kunststoffkomponente pulverförmige Kreide mit einem mittleren Korndurchmesser von weniger als 200 µm, bevorzugt weniger als 100 µm, am meisten bevorzugt weniger als 50 µm.

Die Zugabe von Kreide lockert die Kunststoffkomponente auf und ist ein besonders effektives Mittel zur Porenvergrößerung. Die durch Kreide erzielte Offenporigkeit verstärkt die Wirkung der Aktivkohle und verbessert somit die Geruchsreduktion. In der Regel führt die mit der Zugabe von Kreide einhergehende Porenvergrößerung zu einem opaken Erscheinungsbild der Kunststoffkomponente.

Durch den Zusatz von Aktivkohle erhält die erste Kunststoffkomponente eine schwarze Färbung. Die Farbe der ersten Kunststoffkomponente kann durch die Menge an zugesetzter Aktivkohle und durch den Zusatz von Pigmenten beeinflusst werden.

Die vorliegende Erfindung betrifft außerdem ein Verfahren zur Herstellung eines Mundpflegeinstruments, insbesondere einer Zahnbürste oder eines Zungenreinigers, wobei das Verfahren die folgenden Schritte umfasst:
a) Bereitstellen einer ersten Kunststoffkomponente durch Zugabe von Aktivkohle zu einem thermoplastischen Elastomer,
b) Herstellung eines Reinigungselements aus der ersten Kunststoffkomponente durch ein Spritzgussverfahren.

Das Bereitstellen der ersten Kunststoffkomponente geschieht vorzugsweise, indem das thermoplastische Elastomer aufgeschmolzen wird und die Aktivkohle der so erhaltenen Kunststoffschmelze zugegeben wird. Vorzugsweise wird die dabei hergestellte Kunststoffschmelze im Anschluss an die Zugabe der Aktivkohle direkt durch ein Spritzgussverfahren weiterverarbeitet, um das Reinigungselement zu erhalten. Alternativ dazu kann die Kunststoffschmelze auch zunächst abgekühlt und zum Einsatz im Spritzgussverfahren des Schrittes b) erneut aufgeschmolzen werden.

In einer bevorzugten Ausführungsform umfasst Schritt b) die folgenden Schritte:
b1) Herstellung eines Grundkörpers mit einem Kopfteil und einem Stielteil aus einer zweiten Kunststoffkomponente durch ein Spritzgussverfahren,
b2) Herstellung des Reinigungselements aus der ersten Kunststoffkomponente durch zumindest teilweises Umspritzen des Kopfteils mit der ersten Kunststoffkomponente.

Auf diese Weise kann ein Grundkörper aus einer zweiten, relativ harten und damit mechanisch widerstandsfähigen Kunststoffkomponente hergestellt werden, dessen Oberfläche teilweise mit der relativ weichen ersten Kunststoffkomponente umspritzt wird.

## Patentansprüche

1. Mundpflegeinstrument, insbesondere eine Zahnbürste oder ein Zungenreiniger, mit mindestens einem Reinigungselement aus einer ersten Kunststoffkomponente, wobei die erste Kunststoffkomponente eine Shore-Härte von 1 bis 50 Shore-A gemessen nach DIN ISO 7619-1:2012 aufweist, **dadurch gekennzeichnet, dass** die erste Kunststoffkomponente ein thermoplastisches Elastomer, 1 bis 50 Gew.-% Aktivkohle und 1 bis 35 Gew.-% Kreide enthält.

2. Mundpflegeinstrument nach Anspruch 1, wobei das Reinigungselement spritzgegossen ist.

3. Mundpflegeinstrument nach einem der Ansprüche 1-2, wobei das Reinigungselement noppen-, stäbchen- oder lamellenförmige Vorsprünge aufweist.

4. Mundpflegeinstrument nach einem der Ansprüche 1-3, wobei das Mundpflegeinstrument einen Kopfteil und einen Stielteil umfasst und mindestens ein Reinigungselement am Kopfteil angeordnet ist.

5. Mundpflegeinstrument nach einem der Ansprüche 1-4, wobei das Mundpflegeinstrument einen Grundkörper bestehend aus einer zweiten Kunststoffkomponente mit einem Kopfteil und einem Stielteil umfasst.

6. Mundpflegeinstrument nach einem der Ansprüche 4-5, wobei der Kopfteil zusätzlich zu dem Reinigungselement ein oder mehrere Borstenbündel zur Zahnreinigung aufweist.

7. Mundpflegeinstrument nach Anspruch 6, wobei mindestens ein Reinigungselement auf einer den Borstenbündeln abgewandten Seite des Kopfteils angeordnet ist.

8. Mundpflegeinstrument nach einem der Ansprüche 6-7, wobei mindestens ein Reinigungselement auf der gleichen Seite des Kopfteils wie die Borstenbündel angeordnet ist.

9. Mundpflegeinstrument nach einem der Ansprüche 1-8, wobei die Aktivkohle einen mittleren Korndurchmesser von 200 µm oder weniger aufweist.

10. Verfahren zur Herstellung eines Mundpflegeinstruments, insbesondere einer Zahnbürste oder eines Zungenreinigers, umfassend die Schritte:
a) Bereitstellen einer ersten Kunststoffkomponente durch Zugabe von Aktivkohle zu einem thermoplastischen Elastomer, wobei die erste Kunststoffkomponente eine Shore-Härte von 1 bis 50 Shore-A gemessen nach DIN ISO 7619-1:2012 aufweist, und wobei die erste Kunststoffkomponente 1 bis 50 Gew.-% Aktivkohle und zusätzlich 1 bis 35 Gew.-% Kreide enthält,
b) Herstellung eines Reinigungselements aus der ersten Kunststoffkomponente durch ein Spritzgussverfahren.

11. Verfahren nach Anspruch 10, wobei Schritt b) die folgenden Schritte umfasst:
b1) Herstellung eines Grundkörpers mit einem Kopfteil und einem Stielteil aus einer zweiten Kunststoffkomponente durch ein Spritzgussverfahren,
b2) Herstellung des Reinigungselements aus der ersten Kunststoffkomponente durch zumindest teilweises Umspritzen des Kopfteils mit der ersten Kunststoffkomponente.

## Claims

1. An oral car instrument, in particular a toothbrush or a tongue cleaner, comprising at least one cleaning element made of a first plastic component, the first plastic component having a Shore hardness of 1 to 50 Shore-A measured according to DIN ISO 7619-1:2012, **characterized in that** the first plastic component contains a thermoplastic elastomer, 1 to 50% by weight of activated carbon and 1 to 35% by weight of chalk.

2. The oral care instrument of claim 1, wherein the cleaning element is injection molded.

3. The oral care instrument according to any one of claims 1-2, wherein the cleaning element includes nub-, rod- or lamella shaped protrusions.

4. The oral care instrument according to any one of claims 1-3, wherein the oral care instrument comprises a head portion and a shaft portion, and at least one cleaning element is disposed on the head portion.

5. The oral care instrument according to any one of claims 1-4, wherein the oral care instrument comprises a base body consisting of a second plastic component including a head portion and a shaft portion.

6. The oral care instrument according to any one of claims 4-5, wherein the head portion includes, in addition to the cleaning element, one or more bristle bundles for tooth cleaning.

7. The oral care instrument according to claim 6, wherein at least one cleaning element is arranged on a side of the head portion facing away from the bristle bundles.

8. The oral care instrument according to any one of claims 6-7, wherein at least one cleaning element is arranged on the same side of the head portion as the bristle bundles.

9. The oral care instrument according to any one of claims 1-8, wherein the activated carbon has a mean grain diameter of 200 µm or less.

10. A method for manufacturing an oral care instrument, in particular a toothbrush or a tongue cleaner, comprising the steps of
a) providing a first plastic component by adding activated carbon to a thermoplastic elastomer, wherein the first plastic component has a Shore hardness of 1 to 50 Shore-A measured according to DIN ISO 7619-1:2012, and wherein the first plastic component contains 1 to 50% by weight of activated carbon and additionally 1 to 35% by weight of chalk,
b) manufacturing a cleaning element from the first plastic component by an injection molding process.

11. The method according to claim 10, wherein step b) comprises the steps of
b1) manufacturing a base body including a head portion and a shaft portion from a second plastic component by an injection molding process,
b2) manufacturing the cleaning element from the first plastic component by at least partially overmolding the head portion with the first plastic component.

## Revendications

1. Instrument d'hygiène bucco-dentaire, en particulier brosse à dents ou gratte-langue, comportant au moins un élément de nettoyage constitué d'un premier composant en matière plastique, dans lequel le premier composant en matière plastique présente une dureté Shore de 1 à 50 Shore A, mesurée selon la norme DIN ISO 7619-1:2012, **caractérisé en ce que** le premier composant en matière plastique contient un élastomère thermoplastique, 1 à 50 % en masse de charbon actif, et 1 à 35 % en masse de craie.

2. Instrument d'hygiène bucco-dentaire selon la revendication 1, dans lequel l'élément de nettoyage est moulé par injection.

3. Instrument d'hygiène bucco-dentaire selon l'une des revendications 1 et 2, dans lequel l'élément de nettoyage comporte des protubérances en forme de picot, de bâtonnet ou de lamelle.

4. Instrument d'hygiène bucco-dentaire selon l'une des revendications 1 à 3, dans lequel l'instrument d'hygiène bucco-dentaire comprend une partie de tête et une partie de manche, et au moins un élément de nettoyage est agencé sur la partie de tête.

5. Instrument d'hygiène bucco-dentaire selon l'une des revendications 1 à 4, dans lequel l'instrument d'hygiène bucco-dentaire comprend un corps de base constitué d'un deuxième composant en matière plastique avec une partie de tête et une partie de manche.

6. Instrument d'hygiène bucco-dentaire selon l'une des revendications 4 et 5, dans lequel la partie de tête comporte un ou plusieurs faisceaux de poils pour le nettoyage des dents en plus de l'élément de nettoyage.

7. Instrument d'hygiène bucco-dentaire selon la revendication 6, dans lequel au moins un élément de nettoyage est agencé sur un côté de la partie de tête opposé aux faisceaux de poils.

8. Instrument d'hygiène bucco-dentaire selon l'une des revendications 6 et 7, dans lequel au moins un élément de nettoyage est agencé du même côté de la partie de tête que les faisceaux de poils.

9. Instrument d'hygiène bucco-dentaire selon l'une des revendications 1 à 8, dans lequel le charbon actif présente un diamètre moyen de grain inférieur ou égal à 200 µm.

10. Procédé de fabrication d'un instrument d'hygiène bucco-dentaire, en particulier d'une brosse à dents ou d'un gratte-langue, comprenant les étapes suivantes :
a) fourniture d'un premier composant en matière plastique en ajoutant du charbon actif à un élastomère thermoplastique, dans lequel le premier composant en matière plastique présente une dureté Shore de 1 à 50 Shore A, mesurée selon la norme DIN ISO 7619-1:2012, et dans lequel le premier composant en matière plastique comporte 1 à 50 % en masse de charbon actif et en outre 1 à 35 % en masse de craie,
b) fabrication d'un élément de nettoyage à partir du premier composant en matière plastique via un procédé de moulage par injection.

11. Procédé selon la revendication 10, dans lequel l'étape b) comprend les étapes suivantes :
b1) fabrication d'un corps de base avec une partie de tête et une partie de manche à partir d'un deuxième composant en matière plastique via un procédé de moulage par injection,
b2) fabrication de l'élément de nettoyage à partir du premier composant en matière plastique en encapsulant au moins partiellement la partie de tête avec le premier composant en matière plastique.
